# EUROPEAN PATENT APPLICATION

(11) **EP 1 142 774 A1**
(43) Date of publication of application: **10.10.2001**
(21) Application number: 00107557.1
(22) Date of filing: 07.04.2000
(51) Int. Cl.: B62D 6/10

(54) **A device for automatically driving aiding means for steering gears in automotive vehicles**

(71) Applicant: Visteon Automotive Systems Inc., Dearborn, MI 48126 (US)
(72) Inventor: Ballester, Adrian, 1667 Buenos Aires (AR)
(74) Representative: Kador & Partner

(57) **Abstract**

The present invention refers to a device for automatically driving assisted steering gears for automotive vehicles. There are known aiding devices with valves mounted on the steering column and which are actuated by a torque arm, or which have mechanical aiding means driven by electrical impulses generated by transducers. These known devices require complex arrangements and numerous pieces being both detrimental to manufacturing costs. In order to solve this problem, a device of simple construction is proposed, which is based on a permanent magnet (12) mounted on the support (5) of the steering column which, driven by the steering wheel turning and the torque arm (10) of these steering gears (3,4), actuates an integrated circuit or chip of a plate (13) mounted on the body (2) of the steering column, and, which generates electrical impulses for driving the valve supplying of aiding fluid of electrical mechanisms for driving the rack (3).

## Description

This invention refers to a device for automatically driving, in response to the steering wheel turning, means for aiding driving mechanisms in automotive vehicles, particularly transversal drive mechanisms, which comprise rack and pinion systems, for transferring turns or angular movements from the steering wheel to the guiding wheels.

It is a main object of this invention to provide a device for driving aiding means for said mechanisms, which operate simultaneously with the movement of the steering wheel, and which can be formed by means for transferring a pressurized fluid coming from a source which supplies it and which acts on a piston secured to the rack bar of the driving mechanism and mounted on a cylinder forming the mechanism casing, or, either by electrically-driven rack-associated means.

It is another object of this invention to provide a device for operating said aiding means and which is actuated as a result of angular variations of the force lines in a magnetic field, in order to generate electrically driven impulses on elements for the valve-assisted passage of the aiding fluid, or on elements mechanically associated to the rack and electrically actuated.

Still another object of this invention is to provide a device for the selective switching of said aiding means, such device having novel characteristics and a simplified structure over the known art, but which produces a response simultaneous to the angular movement of the steering wheel to cause a movement relative to a magnetic field regarding means responsive to such variations on a integrated circuit generating magnetically induced electric impulses for driving the rack mechanism.

Another object of this present invention is to provide a device which main components, a permanent magnet and an integrated circuit, being responsive to such variations related to the magnetic line force, are respectively and separately mounted on the support of the tabular body attached to the steering wheel and holding the pinion, and on said tabular body, thereby attaining a secured assembly and reduced costs without affecting operational effectiveness

Finally, it is another object of the invention to provide a device for driving hydraulically aiding means or mechanisms actuated by electric impulses generated by magnetic induction, which are then amplified in order to obtain a predetermined threshold value.

### BACKGROUND OF THE INVENTION

There are well-known and generally used devices for aiding transversal steering gears, which make use of rack and pinion systems and which operate simultaneous with the steering-wheel movement so as to reduce any steering stress in vehicles.

These devices can be actuated by a pressurized fluid, which is driven by hydraulic valves simultaneously actuated with the turning of the steering wheel so as to transfer a pressurized fluid indistinctly to opposite sides of a piston secured to the rack bar which is coaxially disposed relative to an aiding cylinder forming part of the mechanism casing.

Said hydraulic valves are in certain cases mounted on the steering column and cores thereof, when the steering wheel is turned, are positioned by a torque arm with respect to a fixed element of the valve, so as to make the fluid passages coincide towards one or the other side of the aiding cylinder piston.

Other rack aiding devices are also known, which are formed by mechanical elements related to the rack and driven by electric impulses generated during the steering wheel turning, and which are then transferred by a circuit amplifying the same.

Though the above known devices, either hydraulic or mechanic and electrically operated, perform their main function, they require precise arrangements so as to efficiently meet the desired functional requirements, which in practice involve excessively high manufacturing costs.

It is therefore necessary to provide a simple-structure device which, in turn, provides an efficient response regarding the operation of valves in hydraulic devices or electrically driven devices, and to that effect, the present invention proposes a device which comprises components easily mounted on conventional steering gears and which automatically respond to the steering wheel movement in order to adequately assist vehicle driving operations.

### SUMMARY OF THE INVENTION

This invention comprises a device for indistinctly driving hydraulic or mechanical aiding devices which are responsive to electric impulses for steering gears, and which can be mounted on the portion of the said mechanism casing which is directly related to the rack bar.

The device of this invention comprises a permanent magnet mounted on the support holding the tabular body of the steering gear and to which the steering wheel is mounted, and which is positioned on the upper part of the steering gear casing. This support, which carries the pinion, is associated to the lower end of the torque arm, which opposite end is related to the tabular body and the steering wheel.

The permanent magnet, for a normal position of the steering column, i.e. for the vehicle driven in a straight line, is coincidentally disposed towards an integrated circuit (chips) mounted on the lower end of the tabular body holding the steering wheel. That means that the force lines of the magnetic field generated by the magnet are static and uniformly distributed on the sensitive or inductive portions of the chip plate, without inducing any current. These sensitive portions of the chips, upon occurrence of angular variations on the magnetic field caused by the steering wheel movement, generate by induction electrical impulses which intensities vary according to the angular width produced in the magnet, regarding said sensitive portions of the chip plate. As a result, during the steering wheel turning towards any direction, electric impulses are generated which are then transferred by conductors toward an amplifier for such impulses, and where said amplifier has outlets connected to electro-valves forming part of hydraulically aiding devices governing the passage of pressurized fluid toward opposite sides of the pistons of the rack aiding cylinder, or, either toward electrically-driven mechanical means associated to the said rack and responsive to electrical impulses.

The device of this invention is therefore operated on the basis of an inductive magnetic field affecting sensitive portions of the plate in a chip generating electrical impulses, which are then amplified in order to drive the passage means in a selective manner and according to the angular movements of the steering wheel.

### BRIEF DESCRIPTION OF THE DRAWINGS

FIGURE 1 is a schematic and sectional partial view of the rack and pinion steering gear, which comprises the driving device of this invention for use with electrically driven mechanical or hydraulic aiding devices.

FIGURE 2 is a schematic and detailed representation of the inventive device and all components thereof.

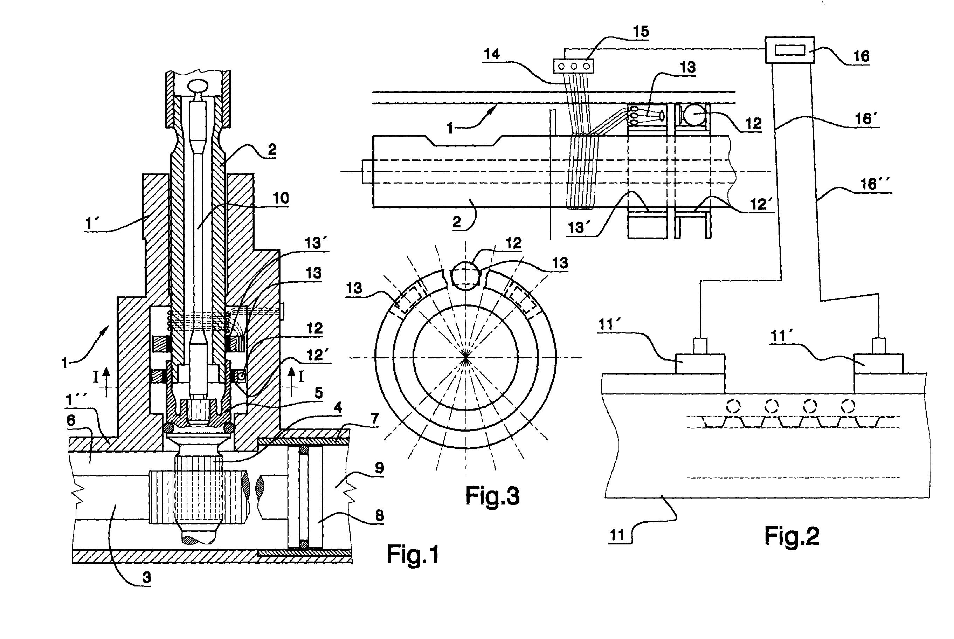

Finally, FIGURE 3 is a cross-sectional representation along line 1-1 of FIGURE 1, which shows the magnet position in response to the steering wheel turning.

### DESCRIPTION OF THE PREFERRED EMBODIMENT OF THE INVENTION

According to FIGURE 1 of the drawings, a conventional aided steering gear for automotive vehicles comprises, in general, a casing 1 having an upper part 1', where tabular body 2 of the steering column is mounted, which is fixed to the steering wheel not shown. Lower part 1" of casing 1, which is transversal to the steering column, comprises a rack bar 3 engaged to pinion 4, which forma a integral part of support 5 rotatively supporting tabular body 2 inside upper part 1'.

Lower part 1" of casing 1 is connected to articulation system or to the driving arms of wheels through rack bar 3. Aiding means for said driving mechanism can be hydraulic, as those exemplified in Figure 1, which generally comprise a chamber 6, to which a sleeve 7 is fixed, for the sliding movement of piston 8 secured to rack bar 3, and which is defined by a second chamber 9 at lower part 1". Support 5 and the upper end of tabular body 2 are related, as already known, by torque arm 10. Chambers 6 and 9 communicate to a source of pressurized fluid though hydraulic valve 11 mounted on lower part 1" of casing 1, said valve comprising electrovalves 11' and 1" for the passage of fluid.

Another example of the aiding means used for this kind of steering gears can be formed by mechanical elements related to rack bar 3, and which are driven by electrical components automatically responsive to the steering wheel movement in order to provide the required assistance.

The device of the invention is comprised by a steering gear, which can incorporate any of the above described aiding means and basically comprises a permanent magnet 12, mounted on support 5 of tabular body 2 at a point radially and outwardly disposed in respect thereto; and a plate 13 forming a integrated circuit or chip having portions sensitive or responsive to incidental variations of the magnetic field force lines of magnet 12, said plate 13 being mounted adjacent and opposite thereto at the end of tabular body 2 corresponding to support 5.

Permanent magnet 12 and chip plate 13 are duly insulated from tabular body 2 and support 5 by plastic rings 12"-13' so as to prevent magnetic leakage or loss from components of the device.

Chip plate 13 comprises conductors 14 corresponding to its sensitive parts, for the transference of electronic impulses generated by induction of the magnetic field of magnet 12 and which are connected to terminal 15 in turn connected to an amplifier 16 therefor, which comprise two outlets 16'-16" respectively connected to connection terminals for solenoids, electrovalves, engines, etc. of the aiding means used for actuating the same in response to the presence of impulses activating the components of aiding means .

As a result of the magnetic features of this device, the use of a plastic casing is necessary for the steering gear, which prevents any possible magnetic leakage and reduces production costs.

The operation of the inventive device is therefore based on the magnetic induction of the integrated circuit incorporated in plate 13, which outlets do not produce electric impulses when there is a radial coincidence between magnet 12 and plate 13, because magnetic field force lines show no angular variations when the steering column is kept in a straight movement position for the vehicle. When a turn occurs in any direction of the column, as caused by torque arm 10, permanent magnet 12 suffers from an angular displacement (Fig. 3) in one direction or the other, which determines a positional variation of the magnetic lines flow, which is detected by the sensitive parts of the integrated circuit, thereby causing impulses for driving any aiding means used by the steering gear.

## Claims

1. A device for automatically driving aiding means for steering gears in automotive vehicles, of the kind comprising a casing having an upper part where a tabular body of a steering column is mounted securely attached to the steering wheel, and, a lower part being transversal to the column and where a transmission mechanism is mounted for transferring the steering wheel movements and which is formed by a rack bar engaged to a pinion articulated with a rotating support of the tabular body, this tabular body being connected to the said support by a torque arm, and said transmission mechanism of the rack and pinion bar being related to hydraulic or mechanical aiding means actuated by electrical impulses generated by the steering wheel movement, said device being **characterized by** comprising a permanent magnet radially position on the periphery of said support of the column tabular body and mounted on a ring of insulating material secured to said support; and an integrated circuit formed by a plate secured on a second ring of insulating material, said plate being disposed on the lower end of the tabular body connecting to the support, said magnet being opposite to the plate for a neutral position of the steering wheel and said plate further having portions being sensitive or responsive to flow variations on the magnet field of the magnet for activating the integrated circuit or chip in response to angular movements of the magnet caused by steering wheel movements, said sensitive and detecting portions of the chip comprising outlets for electrical impulses generated by angular variations of the magnetic lines connected through an amplified of said electrically induced impulses, to driving elements of the aiding means for the steering gear.

2. A device according to claim 1, **characterized in that** said integrated circuit or chip is connected to an amplifier through a connection terminal-

3. A device according to claim 1, **characterized in that** said casing of the steering gear is of plastic material
